# EUROPEAN PATENT APPLICATION

(11) **EP 4 797 089 A1**
(43) Date of publication of application: **26.08.2026**
(21) Application number: 24890600.0
(22) Date of filing: 08.11.2024
(51) Int. Cl.: G06F 9/445

(54) **STATE MANAGEMENT METHOD, CONFIGURATION FILE GENERATION METHOD, AND DEVICE**

(30) Priority: 13.11.2023 CN 202311512210
(71) Applicant: Yinwang Intelligent Technologies Co., Ltd., Shenzhen, Guangdong 518110 (CN)
(72) Inventor: SHEN, Xinda, Shenzhen, Guangdong 518129 (CN); CHENG, Baochuan, Shenzhen, Guangdong 518129 (CN); DUAN, Xiaoxiang, Shenzhen, Guangdong 518129 (CN); SU, Xuefei, Shenzhen, Guangdong 518129 (CN); XI, Zhipeng, Shenzhen, Guangdong 518129 (CN)
(74) Representative: Pfenning, Meinig & Partner mbB
(86) International application number: PCT/CN2024/131077
(87) International publication number: WO 2025/103244

(57) **Abstract**

A state management method, a configuration file generation method, and a device are applied to a movable intelligent device that includes a plurality of control units. Each control unit includes a plurality of function groups, and each function group includes a plurality of processes. Each function group has at least two states, and the control unit controls state switching of the function group, to complete control over the processes in the control unit. At least two of the plurality of control units correspond to a same function group. When it is determined that a first function group needs to be switched from a first state to a second state, a target control unit that corresponds to the first function group may be determined based on a first configuration file that includes a correspondence between each control unit and a function group, and a process that is in the target control unit and that corresponds to the first function group is controlled to perform state switching. According to the method, when there is a same function group in the plurality of control units, states of the same function group in the plurality of control units can be centrally managed based on the first configuration file.

## Description

This application claims priority to Chinese Patent Application No. 202311512210.4, filed with the China National Intellectual Property Administration on November 13, 2023 and entitled "STATE MANAGEMENT METHOD, CONFIGURATION FILE GENERATION METHOD, AND DEVICE", which is incorporated herein by reference in its entirety.

### TECHNICAL FIELD

This application relates to the field of computer technologies, and in particular, to a state management method, a configuration file generation method, and a device.

### BACKGROUND

A vehicle control unit is a device that is mounted on a vehicle and is responsible for controlling normal running of the vehicle, and is an important part of the vehicle. An automotive open system architecture (automotive open system architecture, AUTOSAR) is a standard software architecture developed by the automobile industry. An adaptive platform (adaptive platform, AP) of the AUTOSAR is a flexible, configurable, and secure software architecture proposed to adapt to continuously increasing functions of the vehicle. The AP software architecture is one of software architectures that can be used by the vehicle control unit.

In a vehicle control unit that is based on the AP software architecture, a set of a plurality of processes that are used to implement a function is usually referred to as a function group (function group). State management (state management, SM) is a process in the vehicle control unit used to control state switching of the function group. The SM may control, by controlling state switching of the function group, a running state of a process that corresponds to the function group, so that the vehicle can implement a corresponding function. For example, if a state of a function group is switched from off to startup, a process that corresponds to the function group is also accordingly started to implement the corresponding function.

With development of intelligent driving technologies, more functions need to be performed by the vehicle control unit, and requirements on computational power and safety of the vehicle control unit are increasingly high. To improve the computational power of the vehicle control unit and meet a safety requirement of the vehicle, the vehicle develops toward integrating a plurality of vehicle control units. For example, a plurality of vehicle control units that are based on the AP software architecture are integrated into a vehicle. Different vehicle control units may implement different functions, or different vehicle control units have a same function, and the plurality of vehicle control units may collaboratively complete computing.

When a plurality of vehicle control units are integrated into a vehicle, there may be a same function group in the plurality of vehicle control units. In this case, the same function group in the plurality of vehicle control units needs to be collaboratively managed. That is, states of a plurality of function groups that belong to different vehicle control units need to be switched together. For example, when an operating system of the vehicle needs to be upgraded, operating systems of the plurality of vehicle control units usually need to be upgraded together. In other words, function groups that implement an upgrade function in the plurality of vehicle control units need to be switched from the off state to the startup state together.

However, in the conventional technology, in a scenario in which a plurality of vehicle control units that are based on the AP software architecture are integrated into a vehicle, there is no method for collaboratively managing states of function groups in the plurality of vehicle control units.

### SUMMARY

This application provides a state management method, a configuration file generation method, and a device, to resolve a problem in the conventional technology that states of function groups in a plurality of vehicle control units cannot be collaboratively managed.

According to a first aspect of this application, a state management method is provided, applied to a movable intelligent device that includes a plurality of control units. Each control unit includes a plurality of function groups, and each function group includes a plurality of processes used to implement a same function. Each function group has two states that can be switched, and the control unit controls state switching of the function group, to complete control over the processes in the control unit. At least two of the plurality of control units correspond to a same function group. When it is determined that a first function group needs to be switched from a first state to a second state, a target control unit that corresponds to the first function group may be determined based on a first configuration file that includes a correspondence between each control unit and a function group, and a process that is in the target control unit and that corresponds to the first function group is controlled to perform state switching. The movable intelligent device includes a vehicle. According to the method, when there is a same function group in the plurality of control units, the target control unit that corresponds to the first function group may be determined based on the first configuration file, and the process that is in the target control unit and that corresponds to the first function group is controlled to complete state switching. In this way, states of the same function group in the plurality of control units can be managed in a unified manner. When the movable intelligent device is the vehicle, state switching of the first function group in the plurality of vehicle control units may be completed together. This resolves a problem in the conventional technology that function groups in the plurality of vehicle control units cannot be collaboratively managed.

In an optional implementation, the movable intelligent device may further include a state management center, and the foregoing steps of determining the target control unit and controlling state switching are all performed by the state management center. Specifically, the state management center first determines, from the plurality of control units based on the first configuration file, the target control unit that corresponds to the first function group, and then sends, to the target control unit, a state switching instruction that instructs to switch the first function group from the first state to the second state. After receiving the state switching instruction, the target control unit may control, according to the instruction, state switching of the process that corresponds to the first function group. In this way, states can be centrally managed by using the state management center, which simplifies a flow of managing states.

In an optional implementation, in addition to a process that corresponds to a function group, each control unit may further include a state management node and an execution management node. That the target control unit controls the process that corresponds to the first function group to complete state switching may be specifically that the state management node in the target control unit receives the state switching instruction, and forwards the state switching instruction to the execution management node in the current target control unit. The execution management node controls, according to the received state switching instruction and based on a second configuration file that indicates a function group in the control unit and state information that corresponds to the function group, the process that is in the target control unit and that corresponds to the first function group to perform state switching. The state management center only needs to communicate with the state management node in the control unit, and does not need to communicate with the plurality of processes in the control unit, which simplifies the flow of managing states and improves efficiency of managing states.

In an optional implementation, the state management center may be deployed in a control unit with highest reliability among the plurality of control units. In this way, the control unit in which the state management center is located is less prone to a fault, and normal working of the state management center is ensured. Therefore, when the movable intelligent device is the vehicle, a function of the vehicle can be normally enabled or disabled, which ensures normal running of the vehicle.

In an optional implementation, when state switching of the first function group that corresponds to all control units in the target control unit succeeds, prompt information indicating that state switching of the first function group succeeds is displayed. In addition, the target control unit includes two types of control units: One is a control unit whose safety level is greater than a preset threshold, and the other is a control unit whose safety level is less than or equal to the preset threshold. When the control unit whose safety level is less than or equal to the preset threshold is faulty, whether state switching succeeds may be determined based only on a state switching result of the control unit whose safety level is greater than the preset threshold, and prompt information is displayed when state switching succeeds. In this way, it can be ensured that even if the control unit whose safety level is less than or equal to the preset threshold is faulty, the control unit whose safety level is greater than the preset threshold can still run normally for a period of time. This ensures that a basic safety function of the movable intelligent device can run normally, and ensures safety of a user using the movable intelligent device.

In an optional implementation, the first configuration file includes an identifier of each control unit and an identifier that is of a function group and that corresponds to the identifier of each control unit, to indicate a correspondence between a control unit and a function group. Alternatively, the first configuration file may include an identifier of each control unit, an identifier that is of a function group and that corresponds to the identifier of each control unit, and an identifier of an SoC of the control unit, to indicate correspondences between a plurality of control units and function groups when there are a plurality of SoCs. In this way, the movable intelligent device can manage, by using the identifiers in the first configuration file, state switching of the function groups in the plurality of control units in a unified manner.

According to a second aspect of this application, a configuration file generation method is provided, including: obtaining at least two third configuration files, where each third configuration file is a configuration file of a control unit on a movable intelligent device, and the movable intelligent device is the same as the movable intelligent device in the first aspect of this application; and generating a first configuration file of the movable intelligent device based on the at least two third configuration files, where the first configuration file indicates correspondences between a plurality of control units on the movable intelligent device and function groups. The first configuration file is generated, so that the movable intelligent device can determine, based on the first configuration file, a target control unit that includes a first function group. In this way, when there are a plurality of target control units corresponding to the first function group, process state switching of the first function group in the plurality of target control units can be controlled to be performed together, and state switching of the function groups can be managed in a unified manner.

In an optional implementation, the first configuration file includes an identifier of each control unit and an identifier that is of a function group and that corresponds to the identifier of each control unit, to indicate a correspondence between a control unit and a function group. Alternatively, the first configuration file may include an identifier of each control unit, an identifier that is of a function group and that corresponds to the identifier of each control unit, and an identifier of an SoC of the control unit, to indicate correspondences between a plurality of control units and function groups when there are a plurality of SoCs. In this way, the movable intelligent device can manage, by using the identifiers in the first configuration file, state switching of the function groups in the plurality of control units in a unified manner.

In an optional implementation, the identifier of the control unit included in the first configuration file is generated based on a first identifier that is in the third configuration file and that is used to identify a control unit. The identifier of the control unit in the first configuration file is generated based on the identifier in the third configuration file, so that identifiers used to distinguish data that corresponds to different control units can be added to the first configuration file, and the movable intelligent device can determine, based on the first configuration file, the target control unit that corresponds to the first function group. In addition, a configuration method in conventional technologies does not need to be changed, making configuration of the movable intelligent device more flexible.

According to a third aspect of this application, a movable intelligent device is provided, including a memory and a processor. The memory is configured to store a computer program, and the processor is configured to execute the computer program to implement the state management method according to the first aspect.

According to a fourth aspect of this application, an electronic device is provided, including a memory and a processor. The memory is configured to store a computer program, and the processor is configured to execute the computer program to implement the configuration file generation method according to the second aspect.

According to a fifth aspect of this application, a computer-readable storage medium is provided. The computer-readable storage medium stores a computer program, and the computer program is used to implement the method according to the first aspect or the second aspect.

According to a sixth aspect of this application, a computer program product is provided, including computer-readable code or a non-volatile computer-readable storage medium carrying computer-readable code. When the computer-readable code is run in an electronic device, a processor in the electronic device perform the method according to the first aspect or the second aspect.

According to a seventh aspect of this application, an apparatus is provided. The apparatus has a function of implementing behavior of the device in the method according to the first aspect or the second aspect. The function may be implemented by hardware, or may be implemented by executing corresponding software by hardware. The hardware or software includes one or more modules corresponding to the function.

It should be understood that technical features of the technical solutions provided in the third aspect, the fourth aspect, the fifth aspect, the sixth aspect, and the seventh aspect may all correspond to the method provided in the first aspect and the optional implementations of the first aspect. Therefore, beneficial effects that can be achieved are similar, and details are not described herein again.

### BRIEF DESCRIPTION OF DRAWINGS

FIG. 1 is a diagram of a relationship between a function group and a process according to this application;
FIG. 2 is a diagram of a procedure in which state management controls running of a process according to this application;
FIG. 3 is a diagram of a method for collaboratively managing a plurality of control units according to this application;
FIG. 4 is a simplified diagram of a system architecture to which an embodiment of this application may be applied;
FIG. 5 is a flowchart of a state management method according to an embodiment of this application;
FIG. 6 is a diagram of another state management method according to an embodiment of this application;
FIG. 7 is a flowchart of a configuration file generation method according to an embodiment of this application;
FIG. 8 is a diagram of still another state management method according to an embodiment of this application;
FIG. 9 is a diagram of another configuration file generation method according to an embodiment of this application;
FIG. 10 is a diagram of a movable intelligent device according to an embodiment of this application; and
FIG. 11 is a diagram of another movable intelligent device according to an embodiment of this application.

### DESCRIPTION OF EMBODIMENTS

A vehicle control unit is an important part of a vehicle, and is a device responsible for controlling normal running of the vehicle. As vehicle functions increase, conventional independent vehicle control units such as an engine control unit and a transmission control unit cannot meet complex function requirements. More functions need to be completed through collaboration of a plurality of vehicle control units. However, software systems of electronic components such as control units supplied by different manufacturers are not interconnected, which causes great inconvenience to development of vehicles and hinders development of the automobile industry.

To solve the problem that the electronic components provided by different vendors are not interconnected, the automotive industry has developed a standard software architecture, that is, an AUTOSAR. A series of standards are established for the software architecture, so that the software systems of the electronic components such as vehicle control units provided by different vendors are interconnected, to improve development efficiency of software functions and accelerate development of the automobile industry.

As requirements for functions in the automobile industry further increase, a conventional software architecture defined by the AUTOSAR cannot meet the requirements. Therefore, an AP software architecture is proposed. The AP software architecture is a flexible, configurable, and secure software architecture.

The following briefly describes a part that is in the AP software architecture and that is related to embodiments of this application.

A vehicle control unit that is based on the AP software architecture is also referred to as a compute domain. To complete control over a process, the vehicle control unit that is based on the AP software architecture usually includes execution management (execution management, EM). The execution management is a process that is responsible for managing starting or ending of a process. The process may be started through the execution management, to complete a function corresponding to a vehicle.

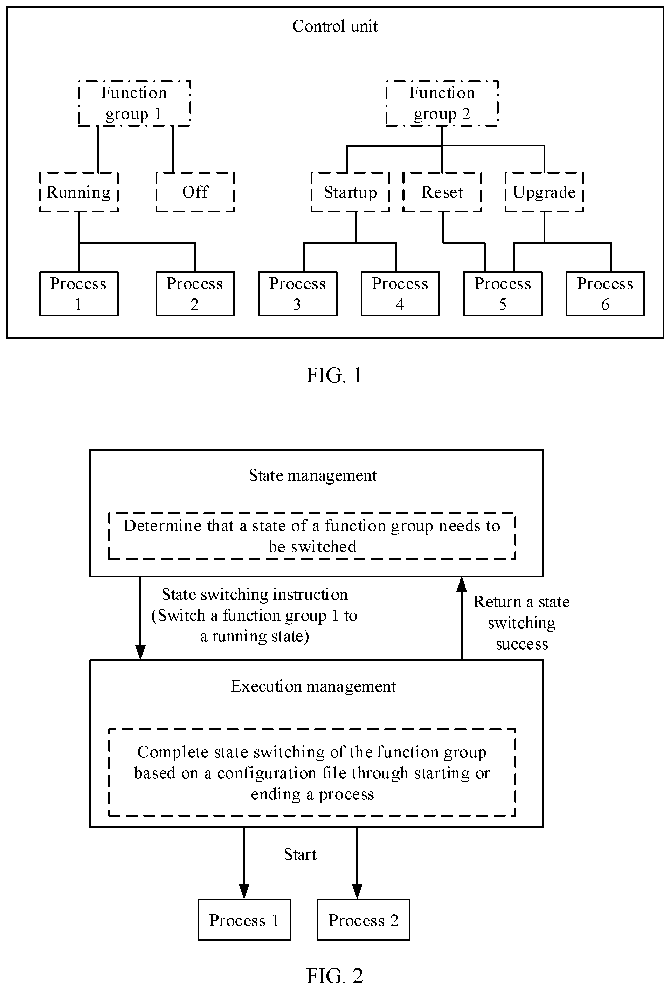

In addition, to simplify a design and development of a system, the vehicle control unit that is based on the AP software architecture further includes state management (SM). The state management is a process used to manage a state of a function group. The function group is a set of a plurality of processes that are in the vehicle control unit and that are used to perform a same function. The function group is usually designed by a developer based on a vehicle requirement. The vehicle control unit that is based on the AP software architecture usually includes at least one function group, and one function group is usually used to complete a specific function. For example, the vehicle control unit that is based on the AP software architecture includes two function groups. One function group may be used to manage a startup state of the vehicle control unit, and the other function group is used to calculate an autonomous driving path of the vehicle. FIG. 1 is a diagram of a vehicle control unit that is based on the AP software architecture and that includes two function groups. A function group 1 is a function group defined by a user and is used to implement a specific function. A function group 2 is a function group defined by a system. The function group 2 is also referred to as MachineState and is used to control starting, restarting, and the like of the vehicle control unit. FIG. 1 is merely a possible example of the vehicle control unit, and does not constitute a limitation on this application.

The state management may manage the state of the function group, to control, through the execution management, starting or stopping of a process corresponding to the function group. A relationship between a function group and a process is described with reference to FIG. 1. In FIG. 1, a dash-dot-line box represents a function group, a dashed-line box represents a state of the function group, and a solid-line box represents a process. A line between the function group and the state of the function group represents a state that the function group may include and may be connected to, and a line between the state of the function group and the process of the function group represents a process that runs in a state. As shown in FIG. 1, the function group 1 has two states: running (running) and off (off). When the function group 1 is in the running state, two processes (a process 1 and a process 2) that correspond to the function group 1 run. When the function group 1 is in the off state, two processes (the process 1 and the process 2) that correspond to the function group 1 stop running. The function group 2 has three states: startup (startup), reset (reset), and upgrade (update). In the startup state of the function group 2, a process 3 and a process 4 that correspond to the function group 2 run. In the reset state of the function group 2, a process 5 runs. In the upgrade state of the function group 2, the process 5 and a process 6 run.

The state management may cooperate with the execution management to control running of the process in the vehicle control unit that is based on the AP software architecture. A specific control procedure may be shown in FIG. 2. In FIG. 2, a solid-line box represents a process, and a dashed-line box represents an action performed by the process. The state management determines, based on a series of trigger conditions, that a state of a function group needs to be switched. The series of trigger conditions may include: First, externally triggered. For example, when receiving information transferred from the outside, the state management may determine that a state of a function group needs to be changed, where the information transferred from the outside may be content input by a user, a state switching request of an external system or another function group, and the like. Second, internally triggered. For example, the state management may monitor a value of a sensor, and when the value of the sensor exceeds a threshold, the state management determines that a state of a function group needs to be switched. For another example, when a preset time cycle is met, the state management may determine that a state of a function group needs to be switched.

When determining that a state of a function group needs to be switched, the state management sends a state switching instruction to the execution management, so that the execution management completes state switching. For example, the state switching instruction may be an instruction instructing to set the function group 1 to be in the running state. After receiving the instruction, the execution management may start or end a corresponding process to complete state switching of the function group 1 based on content in a configuration file. For example, as shown in FIG. 1, if the running state of the function group 1 needs startup of the process 1 and the process 2, as shown in FIG. 2, the execution management controls the process 1 and the process 2 to be started. After the process 1 and the process 2 are started, the execution management may return, to the state management, information indicating that state switching succeeds.

With development of an autonomous driving technology in the field of vehicles, the vehicle has increasingly high requirements on computational power and safety, and a control system of the vehicle also develops toward integrating a plurality of vehicle control units. That is, the plurality of vehicle control units are integrated into a vehicle, and each vehicle control unit is a computer system that can independently run. In this way, the plurality of vehicle control units collaboratively perform computing, so that a computational power requirement of the vehicle can be met. Functions having high safety requirements, for example, emergency vehicle stop and driver protection functions, may be set in a vehicle control unit, code in the vehicle control unit is strictly reviewed, and code in another vehicle control unit does not need to be strictly reviewed. In this way, the functions having high safety requirements may be isolated from another function. This ensures that no problem exists in the code of the functions having high safety requirements, thereby better performing hierarchical management and ensuring safety of the vehicle.

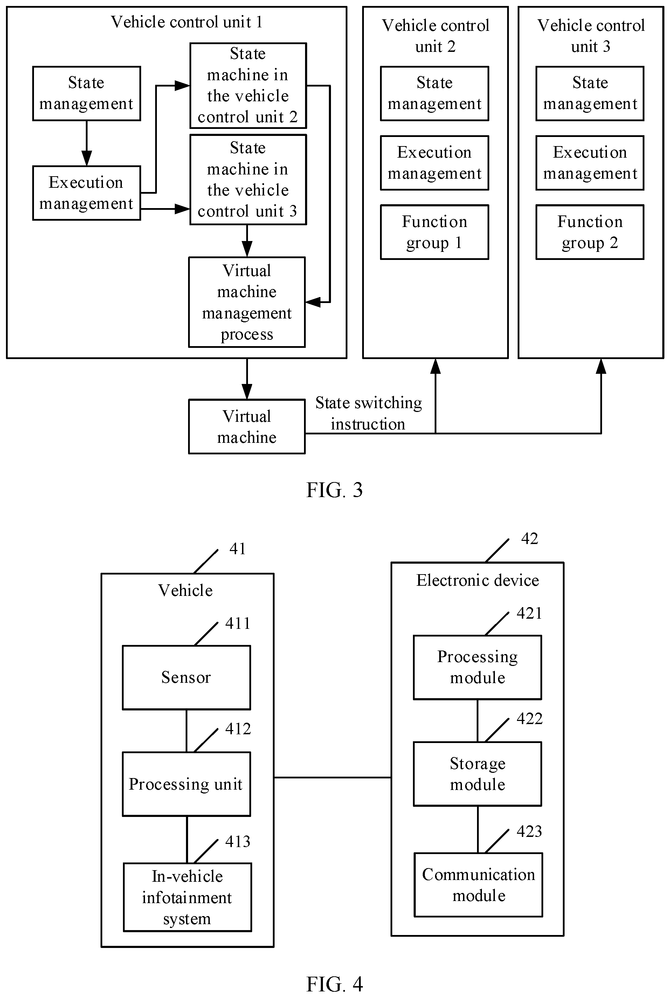

However, a state management method in a scenario in which a plurality of vehicle control units that are based on the AP software architecture are integrated into a vehicle may implement a hierarchical management solution shown in FIG. 3. As shown in FIG. 3, state management is deployed in vehicle control units that are based on the AP software architecture, for example, a vehicle control unit 1, a vehicle control unit 2, and a vehicle control unit 3. The state management can manage only a function group in a vehicle control unit in which the state management is located. In each vehicle control unit, for a procedure in which the state management controls state switching of a function group in a current vehicle control unit, refer to the description for FIG. 2. For a method in which the vehicle control unit 1 controls a function group in another vehicle control unit, a general state machine may be separately set in the vehicle control unit 1 for the vehicle control unit 2 and the vehicle control unit 3. The state machine is used to maintain a state of a function group in a corresponding vehicle control unit, and the state machine may be considered as a function group. When determining that a state of a function group corresponding to another vehicle control unit needs to be switched, the state management in the vehicle control unit 1 controls a corresponding state machine to perform state switching, so that a virtual machine management process in the vehicle control unit can be controlled to communicate with a virtual machine through state switching of the state machine. In this way, the virtual machine can send a state switching instruction to a corresponding vehicle control unit, and state management in the corresponding vehicle control unit controls, according to the state switching instruction, the corresponding vehicle control unit to perform state switching.

For example, the state management in the vehicle control unit 1 determines that a state of a function group corresponding to the vehicle control unit 2 needs to be switched, and may control, through the execution management, the state machine corresponding to the vehicle control unit 2 to perform state switching. In this way, the virtual machine management process sends a state switching instruction of the state machine to the virtual machine, and the virtual machine sends the state switching instruction to the state management in the vehicle control unit 2, so that the vehicle control unit 2 completes management of states of a corresponding function group.

In the foregoing hierarchical management solution, each state management can control only a vehicle control unit in which the state management is located, and is unaware of another vehicle control unit. Therefore, implementation of collaborative management is also complex.

Specifically, different vehicle control units sometimes may include a same function group, that is, a process that corresponds to the same function group is deployed in different vehicle control units. For example, the MachineState function group is used to control a state (for example, startup, off, or reset) of a vehicle control unit. In this case, MachineState may be deployed in almost all vehicle control units. For another example, in some cases, to improve computational power, a plurality of same vehicle control units may be deployed, and function groups deployed in these vehicle control units are also the same.

In the foregoing case, to ensure that the vehicle keeps running normally, state switching of the same function groups in different vehicle control units usually needs to be performed together. For example, if the vehicle needs to be upgraded, MachineState corresponding to different vehicle control units needs to be switched to the upgrade state together. For another example, when functions of a plurality of different vehicle control units are the same, function groups in the plurality of vehicle control units also need to be switched to a specific state together, to collaboratively complete computing.

However, the foregoing hierarchical management solution does not provide a specific implementation of collaborative management, and implementation logic of the solution is relatively complex, which reduces processing efficiency of the vehicle control unit.

Based on this, this application proposes a state management method, applied to a movable intelligent device that includes a plurality of control units. Each control unit includes a plurality of function groups, and each function group includes a plurality of processes used to implement a same function. Each function group has two states that can be switched, and the control unit controls state switching of the function group, to complete control over the processes in the control unit. At least two of the plurality of control units correspond to a same function group. When it is determined that a first function group needs to be switched from a first state to a second state, a target control unit that corresponds to the first function group may be determined based on a first configuration file that includes a correspondence between each control unit and a function group, and a process that is in the target control unit and that corresponds to the first function group is controlled to perform state switching.

According to the method, when there is a same function group in the plurality of control units, states of the same function group in the plurality of control units can be managed in a unified manner based on the first configuration file, which resolves a corresponding problem in the conventional technology. In addition, implementation logic of the foregoing solution is simpler, and processing efficiency can also be improved.

It should be noted that although the foregoing uses the vehicle control unit that is based on the AP software architecture as an example to describe concepts related to the function group, the solutions in embodiments of this application are not limited to being applied to a vehicle, and are not limited to being applied to the AP software architecture. First, for a software architecture of the control unit in this application, the control unit in this application is not limited to the vehicle control unit that is based on the AP software architecture, and the control unit in this application may also be a control unit of another software architecture that has a state management requirement. In addition, for the movable intelligent device in this application, the movable intelligent device in this application may be a vehicle, or may be another intelligent device such as a robot or another carrying means other than a vehicle. Any device having a state management requirement may be used as an execution body of this application.

The carrying means may include a road transportation means, a water transportation means, an air transportation means, an industrial device, an agricultural device, an entertainment device, or the like. For example, the vehicle in embodiments of this application may be a transportation means (for example, a car, a bus, a subway, a high-speed railway, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an entertainment device, a toy vehicle, a ship, a hovercraft, a submarine, an airplane, a helicopter, or the like. A specific type, form, function, and the like of the vehicle are not limited in embodiments of this application.

The following uses a vehicle as an example to describe a system to which the methods shown in embodiments of this application are applied. FIG. 4 is a simplified diagram of a system architecture to which an embodiment of this application may be applied. As shown in FIG. 4, the system architecture may include a vehicle 41 and an electronic device 42.

The vehicle 41 is a device that has a state management requirement, and is configured to implement the state management method provided in embodiments of this application. Hardware of the vehicle 41 may include a sensor 411, a processing unit 412, and an in-vehicle infotainment system 413.

The sensor 411 may include a camera, a positioning apparatus, a lidar, a millimeter-wave radar, an ultrasonic radar, and the like. The sensor 411 is configured to collect data, and transfer the data to the processing unit 412, and the processing unit 412 processes the data.

The processing unit 412 may include a plurality of vehicle control units. The processing unit 412 may collect the data collected by the sensor 411, receive an instruction sent by a user through the in-vehicle infotainment system 413, and process the received data. In this embodiment of this application, state management in the vehicle control unit may determine, based on the data collected by the sensor 411 or according to the instruction sent by the in-vehicle infotainment system 413, that state switching needs to be performed on a specific function group. In this embodiment of this application, the vehicle control unit may be a vehicle control unit that is based on an AP software architecture. A software architecture on which the vehicle control unit is based may alternatively be another software architecture that has a state management requirement. This is not limited in embodiments of this application. The processing unit 412 may perform the method in embodiments of this application. For example, the processing unit 412 may control state switching of function groups in a plurality of vehicle control units based on a first configuration file, to ensure normal running of the vehicle.

The vehicle control unit may be a device that is mounted on the vehicle and that is configured to control or manage a function, for example, a cockpit domain controller (or referred to as an intelligent information domain controller), a vehicle body domain controller, a power domain controller, a chassis domain controller, or a vehicle-mounted computing platform (or referred to as an intelligent driving domain controller).

The cockpit domain controller is mainly configured to control various electronic information system functions in an intelligent cockpit of the vehicle, for example, a central control system, an in-vehicle infotainment system, a head-up display, a seat system, an instrument system, a rear-view mirror system, a driving behavior monitoring system, and a navigation system. The vehicle body domain controller is mainly configured to control various vehicle body functions, including but not limited to control of a vehicle front lamp, a vehicle rear lamp, an interior decoration lamp, a vehicle door lock, a vehicle window, a skylight, a wiper, an electric trunk, a smart key, an air conditioner, an antenna, gateway communication, and the like. The power domain controller is mainly configured to control a powertrain of the vehicle, optimize power performance of the vehicle, and ensure power safety of the vehicle, for example, perform engine management, gearbox management, battery management, power distribution management, emission management, speed limit management, and fuel and electricity saving management. The chassis domain controller is mainly configured to control a traveling behavior and a traveling posture of the vehicle, and has functions including but are not limited to braking system management, vehicle transmission system management, traveling system management, steering system management, vehicle speed sensor management, vehicle body posture sensor management, air suspension system management, airbag system management, and the like. The intelligent driving domain controller is mainly configured to provide services such as autonomous driving sensing and decision-making, for example, image information receiving, image information processing and determining, data processing and computing, navigation and route planning, and quick determining and decision-making on a real-time situation. The intelligent driving domain controller needs to process algorithms at three levels of sensing, decision-making, and control, and has the highest requirements on software and hardware of the domain controller.

The in-vehicle infotainment system 413 is a comprehensive in-vehicle information processing system, and can implement functions such as navigation, vehicle body control, and entertainment. The in-vehicle infotainment system 413 may interact with a user, and receive an operation of the user. The in-vehicle infotainment system may communicate with the processing unit 412, and transfer the operation of the user to the processing unit 412, so that the processing unit 412 can process the operation of the user.

The electronic device 42 is a device for configuring the vehicle 41, and is configured to implement a configuration file generation method provided in embodiments of this application. The electronic device 42 may include a processing module 421, a storage module 422, a communication module 423.

The processing module 421 is a control center of the electronic device. For example, the processing module 421 may be any one or a combination of a central processing unit (central processing unit, CPU), a field-programmable gate array (field-programmable gate array, FPGA), and an application-specific integrated circuit (application-specific integrated circuit, ASIC).

The processing module 421 may be configured to receive the operation of the user. For example, the processing module 421 may receive the operation of the user through an input module. The processing module 421 may be further configured to generate a plurality of third configuration files of the vehicle 41 based on the received operation of the user. Each third configuration file describes configuration information of a vehicle control unit. The processing module 421 may further perform format conversion on the plurality of third configuration files, to convert the plurality of third configuration files into second configuration files that can be read by the vehicle 41. The processing module 421 may further generate, based on the plurality of third configuration files, a first configuration file that includes a correspondence between a vehicle control unit and a function group. Specific forms of the first configuration file, the second configuration file, and the third configuration file are described in detail in the following.

The storage module 422 is configured to store data. In this embodiment of this application, the storage module 422 may be configured to store the first configuration file, the second configuration file, and the third configuration file.

The communication module 423 is configured to communicate with the processing unit 412 of the vehicle 41, to send the generated first configuration file and second configuration file to the processing unit 412 of the vehicle 41, to complete configuration of the processing unit 412 of the vehicle 41.

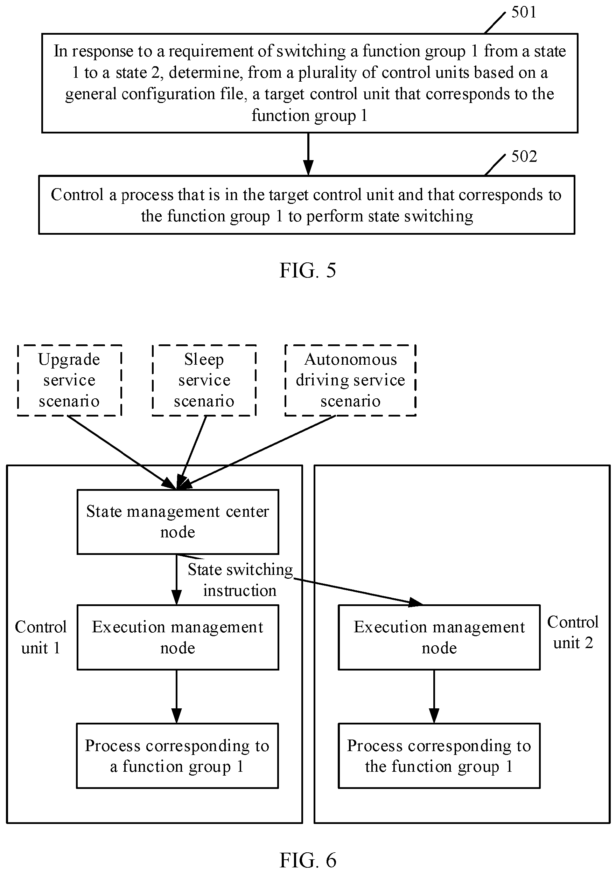

The following describes the methods in example embodiments of this application with reference to FIG. 5, FIG. 6, and FIG. 7.

This application shows a state management method. The method is applied to a movable intelligent device. The movable intelligent device herein may be a vehicle or another carrying means. The movable intelligent device includes a plurality of control units, and different control units may run independently. Each of the plurality of control units includes a plurality of processes, and the plurality of processes included in each control unit may be divided into a plurality of function groups based on different implemented functions.

For example, the movable intelligent device is the vehicle, and a control unit includes a process 1, a process 2, and a process 3. The process 1 and the process 2 are used to implement an autonomous driving path planning function, and the process 3 is responsible for performing lane line recognition based on data collected by a vehicle camera sensor. According to different implemented functions, the process 1 and the process 2 belong to a function group 1, and the process 3 belongs to a function group 2.

Each of the foregoing function groups includes at least two states. For meanings of the states of the function groups, refer to the foregoing description. The state of the function group is used to control a running state of a process that corresponds to the function group. The running state of the process is that the process is started or stopped. In different states of the function group, the control unit may control, based on the state of the function group, at least one process that corresponds to the function group to start or stop. For example, as shown in FIG. 1, in different states of the function group, processes that are correspondingly started in the control unit are different. In the running state of the function group 1, the process 1 and the process 2 that are included in the function group may be started. In the startup state of the function group 2, the process 3 and the process 4 are started, and the process 5 and the process 6 are not started.

In addition, this application is specific to a scenario in which there is a collaborative management requirement, that is, a process that corresponds to a same function group is deployed in at least two of a plurality of control units. For example, the movable intelligent device may include three control units, and at least two of the three control units correspond to the function group 1. That is, the process 1 and the process 2 that correspond to the function group 1 are deployed in the at least two control units.

Based on the foregoing description, FIG. 5 is a flowchart of the state management method according to an embodiment of this application. The method includes the following steps.

Step 501: In response to a requirement of switching the function group 1 from a state 1 to a state 2, determine, from the plurality of control units based on a general configuration file, a target control unit that corresponds to the function group 1.

Specifically, when there is a requirement of implementing a function, the function group is triggered to perform state switching. For example, to implement a function of determining an autonomous driving path in an autonomous driving service scenario, there is a requirement of switching the function group 1 from the state 1 to the state 2. In response to the requirement, a target control unit that corresponds to a first function group is determined from the plurality of control units based on the general configuration file. The general configuration file indicates at least a correspondence between each of the plurality of control units and a function group.

In this application, the function group 1 may also be referred to as the first function group, the state 1 may also be referred to as a first state, the state 2 may also be referred to as a second state, and the general configuration file may also be referred to as a first configuration file.

The target control unit is a control unit in which a process that corresponds to the first function group is deployed and that is of the plurality of control units. Specific descriptions of the general configuration file are described in detail below.

Step 502: Control the process that is in the target control unit and that corresponds to the function group 1 to perform state switching.

After the target control unit is determined, the process that is in the target control unit and that corresponds to the function group 1 may be controlled to perform state switching. The process that corresponds to the function group 1 herein may refer to all processes that correspond to the function group 1, or may refer to a part of processes that correspond to the function group 1. The process that corresponds to the function group 1 may be specifically determined based on a process started in the state 1 and the state 2. That is, a process that does not need to be started in the state 2 but needs to be started in the state 1 is ended, and a process that needs to be started in the state 2 but does not need to be started in the state 1 is started. For example, if the process 1 needs to be started in the state 1, and the process 1 and the process 2 need to be started in the state 2, state switching of the process that corresponds to the function group 1 may mean that the process 2 is started. For example, if the process 1 needs to be started in the state 1, and the process 2 needs to be started in the state 2, state switching of the process that corresponds to the function group 1 may mean that the process 1 is ended and the process 2 is started.

For a specific control procedure of implementing the foregoing method, for example, in a control unit based on an AP software architecture, control of state switching of the function group 1 may be completed through collaboration of state management and execution management. For details about the implementation method, see below for more details.

The following specifically describes the foregoing procedure with reference to FIG. 6. FIG. 6 is a diagram of the state management method according to an embodiment of this application. In this embodiment, the movable intelligent device is a vehicle, and the vehicle includes two control units: a control unit 1 and a control unit 2. As described above, the control unit may be a domain controller, and the two control units herein may be intelligent domain controllers. The two intelligent domain controllers jointly form an intelligent driving platform of the vehicle. In the intelligent driving platform, the vehicle needs to complete functions in a plurality of service scenarios, for example, an autonomous driving service scenario, an upgrade service scenario, and a sleep service scenario. Functions in different service scenarios are completed by using different processes. A dashed-line box in FIG. 6 represents the service scenario. A connection line between the service scenario and a state management center represents that the state management center needs to control state switching of the function group to implement the service scenario.

The control unit 1 and the control unit 2 both include an execution management node, and the execution management node herein is the execution management mentioned above. In addition to the execution management node, the control unit 1 may further include the state management center (state management center, SMC). A difference between the state management center and the foregoing state management is that the state management usually has a management permission only on a function group in a control unit in which the state management is located, but the state management center in this embodiment may manage function groups in a plurality of control units, which changes the hierarchical management solution.

In addition, although FIG. 6 shows that the state management center is deployed in the control unit 1, it should be noted that the state management center unit is not limited to being deployed in the control unit 1, and may alternatively be deployed in the control unit 2. In addition, a control unit may alternatively be newly added to the vehicle, the state management center is deployed in the newly added control unit, and an execution management node and another process are not deployed in the newly added control node. In other words, the newly added control unit is a control unit specially configured to run the state management center.

An appropriate control unit may be further determined based on reliability of each control unit included in the movable intelligent device, to deploy the state management center. Specifically, to ensure normal running of the state management center, the state management center may be deployed in a control unit that is more reliable and is less prone to a fault. For example, the state management center may be deployed in a control unit with highest reliability among a plurality of control units. In this way, the state management center is deployed in the control unit that is more unlikely to be faulty, which ensures normal running of the state management center, thereby ensuring safe running of the movable intelligent device.

For a specific state switching method, the state management center may determine the target control unit from the plurality of control units based on the general configuration file. The determining method is the same as that described above.

A procedure of controlling the process that is in the target control unit and that corresponds to the function group 1 to perform state switching may be: The state management center sends a state switching instruction to the target control unit. As shown in FIG. 6, the process that corresponds to the function group 1 is deployed in both the control unit 1 and the control unit 2. Target control units herein may be the control unit 1 and the control unit 2. The state management center may determine that the target control units are the control unit 1 and the control unit 2 based on a correspondence between a control unit and a function group in the general configuration file. The state switching instruction is also an instruction that instructs the function group 1 to switch from the state 1 to the state 2. The target control unit receives the state switching instruction, and controls, according to the instruction, the process that is in the target control unit and that corresponds to the function group 1 to perform state switching.

In a method for communication between the state management center and the target control node, communication may be performed by using an existing intra-control unit or an inter-control unit communication means. A specific communication method is not limited in embodiments of this application.

As shown in FIG. 6, that the state management center sends the state switching instruction to the target control unit, and the target control unit controls, according to the state switching instruction, the process that corresponds to the function group 1 to complete state switching may be: The state management center delivers the state switching instruction to an execution management node in the target control unit, and the execution management node controls the process that corresponds to the function group 1 to perform state switching.

In addition, in some cases, to control and complete state switching of the function group 1, the state management center needs to send the state switching instruction to the execution management node, and also needs to send the state switching instruction or other information to another process in the target control unit. For example, the state management center further needs to send a state change notification to a process such as a monitoring process and a log recording process in the target control unit, so that the monitoring process can monitor running of the control unit, and the log recording process can record a state change in a running procedure of the control unit. In the foregoing case, each control unit may further include a state management node (state management node, SMN). The state management center may send a state switching instruction to the state management node in the target control unit. The state management node forwards the state switching instruction to the execution management node, or forwards the state switching instruction to the execution management node and another process. In this way, the execution management node may control, according to the state switching instruction and based on a sub-configuration file, a process that corresponds to the first function group in the target control unit to perform state switching.

In this embodiment of this application, the sub-configuration file is also referred to as a second configuration file, and one sub-configuration file may include a function group in a control unit and state information that corresponds to the function group. The state information may include states corresponding to the function group, state switching that can be performed on the function group, and a process that needs to be started in each state of the function group. In this way, the execution management node may determine, based on a sub-configuration file of a control unit in which the execution management node is located, a process that needs to be started or ended after the state of the function group 1 is switched, to complete state switching of the function group 1.

In this way, when the state management center needs to send information to the execution management node and another process to control the function group to complete state switching, the state management center only needs to distinguish between state management nodes in different control units, and does not need to distinguish between a plurality of different processes in different control units. This can improve processing efficiency.

In this embodiment of this application, management of states of the movable intelligent device that includes a plurality of control units is improved, and the foregoing method of centrally managing states in a plurality of domains (namely, control units) is proposed, which supports to define, in different control units, function groups required by different control units and states of the function groups, deploy one state management center, maintain states of the plurality of control units, and deploy one state management node in each control unit. In a deployment manner with a single state management center and a plurality of state management nodes, different function groups defined in a plurality of control units are stored in the general configuration file, and the general configuration file may be read by the state management center. In this way, different function groups in the plurality of control units and states of the function groups can be centrally managed, to collaboratively manage the plurality of control units.

The following further describes a configuration file generation method provided in embodiments of this application.

When each state management has a control permission only on a control unit in which the state management is located, only one configuration file is generated for each control unit. The state management and execution management manage a state of a function group based on the configuration file. However, in this application, because states of all control units need to be managed in a unified manner, a correspondence between a control unit and a function group needs to be determined based on a configuration file. Therefore, for each control unit, in addition to generating a configuration file corresponding to the control unit, a general configuration file needs to be generated. The following describes how to generate the general configuration file.

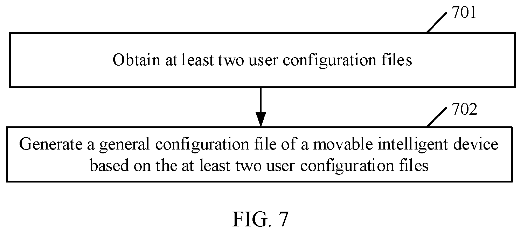

FIG. 7 is a flowchart of the configuration file generation method according to this application. The method includes the following steps.

Step 701: Obtain at least two user configuration files.

First, the at least two user configuration files may be obtained. In this application, a user may configure each control unit on a movable intelligent device via an electronic device (such as a personal computer or a server). The user herein is a user who is allowed to configure the movable intelligent device. After the user completes configuration for each control unit on the movable intelligent device, a user configuration file corresponding to each control unit is generated.

For content of the user configuration file, the user configuration file includes a configuration of a function group in a corresponding control unit. Specifically, the user configuration file indicates a function group that corresponds to each process included in the corresponding control unit and state information of each function group. The state information indicates at least two states that a corresponding function group includes, and the state of the function group is used to control a running state of a process that corresponds to the function group. The state information may further include state switching that can be performed on each function group. That is, the user configuration file records the function groups included in the control unit, the process that corresponds to each function group, a plurality of states of the function group, and state switching that can be performed on the function group. Starting or stopping of the process that corresponds to the function group may be controlled through controlling state switching of the function group, so that the movable intelligent device can implement a specific function.

In addition, the user configuration file is also referred to as a third configuration file in this application. The third configuration file may be the same as the second configuration file, that is, the user configuration file may be directly used by the execution management node of the control unit. In some embodiments, the third configuration file may be different from the second configuration file. Specifically, the third configuration file may be a file that cannot be normally read by the movable intelligent device. To facilitate file reading by the movable intelligent device, the second configuration file may be a configuration file that can be read by the movable intelligent device and that is obtained after format conversion is performed on the third configuration file.

It can be determined from the foregoing description that the at least two user configuration files one-to-one correspond to at least two control units on the movable intelligent device. The configuration file generation method and the foregoing state management method deal with a same scenario, and the control unit herein is also the same as the foregoing control unit. Each of the at least two control units includes a plurality of processes, and the plurality of processes in each control unit are divided into a plurality of function groups based on different implemented functions.

Step 702: Generate a general configuration file of the movable intelligent device based on the at least two user configuration files.

After the at least two user configuration files are obtained, the general configuration file of the movable intelligent device may be generated based on the obtained at least two user configuration files. The general configuration file has a same meaning as the foregoing general configuration file, that is, a configuration file that indicates at least a correspondence between each of the plurality of control units on the movable intelligent device and a function group.

By generating the general configuration file, a process that can read the general configuration file in the device, for example, the state management center, may determine, based on the general configuration file, function groups included in all control units in the movable intelligent device, so that unified management can be performed for the movable intelligent device, thereby improving management efficiency.

The following describes the configuration file generation method and the state management method that are shown in this application by using an example in which the movable intelligent device is a vehicle, the control unit is an intelligent domain controller, and the control unit is a control unit that is based on an AP software architecture.

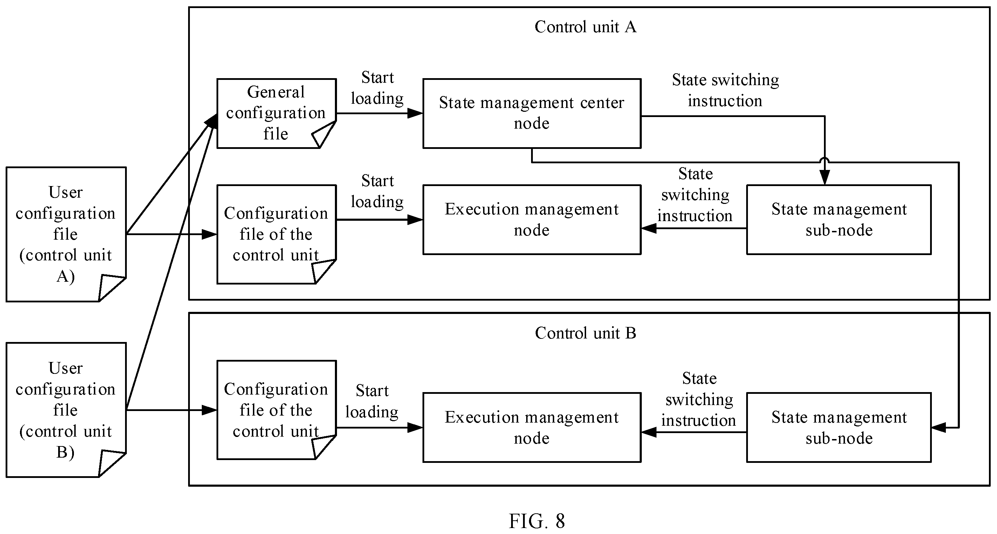

As shown in FIG. 8, the vehicle in this embodiment of this application includes two control units: a control unit A and a control unit B. The control unit A corresponds to a safety domain of the vehicle, and is configured to complete a safety-related function in an intelligent driving platform of the vehicle, for example, protecting driver's safety. The control unit B corresponds to a general domain, and is configured to complete a function other than the safety-related function. The safety domain is more reliable than a control domain. Therefore, a state management center may be deployed in the safety domain (that is, the control unit A), and the state management center is responsible for centrally managing states of all control units.

In addition, as shown in FIG. 8, a state management node and an execution management node are deployed in both the control unit A and the control unit B. The execution management node is configured to control starting or stopping of a process. The state management node is mainly configured to: receive a state switching instruction of the state management center, and transparently transmit the instruction to a process in the control unit, for example, may transparently transmit the instruction to the execution management node, so that the execution management node completes control over the process. The state management center may load a general configuration file during startup, and the execution management node may load a configuration file of the control unit during startup, so that the foregoing files can be used during state management.

In FIG. 8, two sub-configuration files may be respectively generated based on user configuration files of the control unit A and the control unit B. In addition, the general configuration file may be generated based on the two user configuration files. When performing state management, the state management center may send, based on the general configuration file, a state switching instruction to a state management node in a control unit in which a function group for which state switching needs to be performed is located. After receiving the state switching instruction, the state management node may forward the state switching instruction to the execution management node, so that the execution management node can switch a state of a corresponding function group based on the configuration file of the control unit.

After FIG. 8 is briefly described, the following describes the method in this embodiment of this application starting from a method of generating a file based on a configuration file.

Step 1: Configure function groups, states of the function groups, and state switching information.

Specifically, a plurality of control units may include a same function group. To facilitate configuration of the control unit, a project of an intelligent driving platform may be first created, and basic information of the function group is configured in a common configuration file of the project.

The configuration file herein may be a file in an ARXML (AUTOSAR XML) format, which is a human-machine readable text format used to describe an AUTOSAR model in an extensible markup language (extensible markup language, XML).

As shown below, the function groups configured in the common ARXML may include the following configuration information:
- Intelligent driving platform
   - Function group configuration
      - Function group A (function group)

      - Running (state of the function group)
      - Off (state of the function group)
      - Switching from off to running (state switching of the function group)
      - Switching from running to off (state switching of the function group)
   - MachineState (function group)
      ...
      - Function group B (function group)
         ...
      - Function group C (function group)
         ...

In the foregoing configuration information, the "intelligent driving platform" represents the project of the intelligent driving platform, and all ARXML files included in the intelligent driving platform are included following the "intelligent driving platform". The function group configuration represents a common ARXML file corresponding to a function group, and several function groups may be configured in the file. In the foregoing example, four function groups are configured: the function group A, the function group B, the function group C, and MachineState. The descriptions "function group" in the parentheses following the function group A, the function group B, the function group C, and MachineState are labels that represent the specific configured content, that is, represent that the configured function group A and MachineState are function groups. The descriptions "state" in the parentheses following running and off are labels that represent that the configured content is the states of the function group, that is, represent that running and off are the states of the function group A. Similarly, the description "state switching of the function group" in the parentheses represent that the configured content is that state switching is allowed for the function group, that is, represent that the function group A is allowed to switch from the off state to the running state, and is also allowed to switch from the running state to the off state. Configuration content of the function group B, the function group C, and MachineState is similar to that of the function group A.

The foregoing is merely an example in which two states are configured for one function group. It is easy to understand that one function group may include more than two states, or three or more states may be configured for one function group.

Step 2: Configure a plurality of control units.

After the function groups are configured, the plurality of control units may be further configured, that is, function groups in the plurality of control units may be configured.

In addition, an operating system, system start and stop time, and a processor of the control unit may also be configured.

The configuration in the first step and the second step may be completed by a user. After the user completes the configuration, an electronic device used by the user to configure the movable intelligent device may respectively generate the user configuration file for the control unit A and the control unit B, for example, may generate two user configuration files: "control unit A.ARXML" and "control unit B.ARXML". The two user configuration files respectively record function groups included in the control unit A and the control unit B, states of the function groups, state switching of the function groups, and the like.

Content included in the user configuration file of the control unit A may be:
- Control unit A (control unit)
   ...
   - Function group B (function group)
   - Function group C (function group)
   - MachineState (function group)
Content included in the user configuration file of the control unit B may be:
- Control unit B (control unit)
   ...
   - Function group A (function group)
   - Function group C (function group)
   - MachineState (function group)

In the foregoing content, the "control unit" in the parentheses following the control unit A and that in the parentheses following the control unit B are labels that represent that the configured control unit A and the configured control unit B are control units. The "function group" in the parentheses following the function group A, and those in the parentheses following the function group B, the function group C, and MachineState are also labels that represent that the configured content is the function groups that have been configured in the common ARXML file. The ellipses represent that operating systems, system start and stop time, and processors are configured for the control units.

It can be learned from the foregoing user configuration files that three function groups, namely, the function group B, the function group C, and MachineState, are configured in the control unit A, and three function groups, namely, the function group A, the function group C, and MachineState, are configured in the control unit B.

Step 3: Generate the general configuration file based on the user configuration files of the control unit A and the control unit B by using a tool chain. Perform format conversion on the user configuration files of the control unit A and the control unit B to obtain the sub-configuration files of the control unit A and the control unit B.

The third step corresponds to a step of configuration by using the tool chain in FIG. 8.

As described above, the intelligent driving platform cannot directly read user configuration files. Therefore, the user configuration files may be first converted into sub-configuration files. That is, formats of the user configuration files of at least two control units may be converted, to obtain at least two sub-configuration files. The sub-configuration file indicates a function group and state information of the function group configured in a current control unit. In addition, to facilitate central management of states by the state management center, the general configuration file including a correspondence between each control unit and a function group may be generated. The general configuration file includes at least the correspondence between the control unit and the function group, and may further include state information of function groups included in each control unit.

The user configuration file may be used by the execution management node. That is, as shown in FIG. 8, the execution management node in the control unit A reads the sub-configuration file of the control unit A, and the execution management node in the control unit B reads the sub-configuration file of the control unit B.

For a specific implementation, format conversion may be performed on the user configuration file of the control unit A, to convert the user configuration file into a sub-configuration file that can be read by the intelligent driving platform. For example, if a file format that can be read by the intelligent driving platform is .json, format conversion may be performed on "control unit A.ARXML" to convert the file into a "control unit A.json" file. A manner of generating the sub-configuration file of the control unit B is the same as a manner of generating the configuration file A.

For a procedure of generating the general configuration file, different from each configuration file that includes configuration information of only one control unit, the general configuration file in this application may include configuration information of a plurality of control units. Therefore, information used to identify a control unit to which the configuration information belongs needs to be added to the general configuration file. In this way, the state management center may distinguish, based on the foregoing configuration information, between function groups included in different control units.

In addition, when a plurality of system-on-a-chips (system-on-a-chips, SoCs) are integrated into one intelligent driving platform, the general configuration file may further include information used to identify different SoCs.

That is, the general configuration file includes an identifier of each of the plurality of control units, and an identifier that is of a function group and that corresponds to the identifier of each control unit. Alternatively, the general configuration file includes an identifier of each of the plurality of control units, an identifier that is of a function group and that corresponds to the identifier of each control unit, and an identifier that is of the system-on-a-chip SoC and that corresponds to the identifier of each control unit.

An example in which a json file stores a key-value (key-value) pair is used, and the configuration information corresponding to the control unit A in the general configuration file may include:

```
         Key: control unit
         Value: [
               (key: function group
               value: ...)
               ...
               (key: an identifier of the control unit
               value: control unit A)
               ]
```

The configuration information of the control unit B in the general configuration file is similar. In the foregoing description, content in the square brackets following the control unit key is configuration information corresponding to one control unit. To avoid repeated description, a configuration of the function group and another configuration of the control unit are omitted here. Certainly, the general configuration file may not include another configuration, and only function groups included in each control unit are configured herein, or only function groups included in each control unit and states of the function groups are configured.

The key-value pair "an identifier of the control unit-control unit A" is information newly added to the general configuration file for the control unit A. The key-value pair is used to identify that the configuration information corresponds to the control unit A.

The key-value pair "an identifier of the control unit-control unit A" may be automatically generated based on information such as a name of a user configuration file during parsing by the tool chain, or may be an extension field (admin data) added to a user configuration file, where the extension field is used to identify a control unit that corresponds to the user configuration file, and during parsing by the tool chain, the extension field may be parsed into the key-value pair "an identifier of the control unit-control unit A".

That is, the identifier that is of the control unit and that is included in the general configuration file is generated based on a first identifier in the at least two configuration files, and the first identifier is an identifier of a control unit that corresponds to a third configuration file to which the first identifier belongs.

The first identifier is also the foregoing extension field.

For example, the user configuration file in step 2 may be shown as follows:
- Control unit A (control unit)
   ...
   - Function group B (function group)
   - Function group C (function group)
   - MachineState (function group)
   - Control unit A (label of the control unit)
- Control unit B
   ...
   - Function group A (function group)
   - Function group C (function group)
   - MachineState (function group)
   - Control unit B (label of the control unit)

Different from the second step, labels of control units are added to the user configuration file herein. The "label of the configuration file" in the parentheses following the control unit A and that in the parentheses following the control unit B are labels that represent that the "control unit A" and the "control unit B" followed by the labels are labels of control units.

After the general configuration file, the sub-configuration file of the control unit A, and the sub-configuration file of the control unit B are obtained, these files may be stored in the intelligent driving platform.

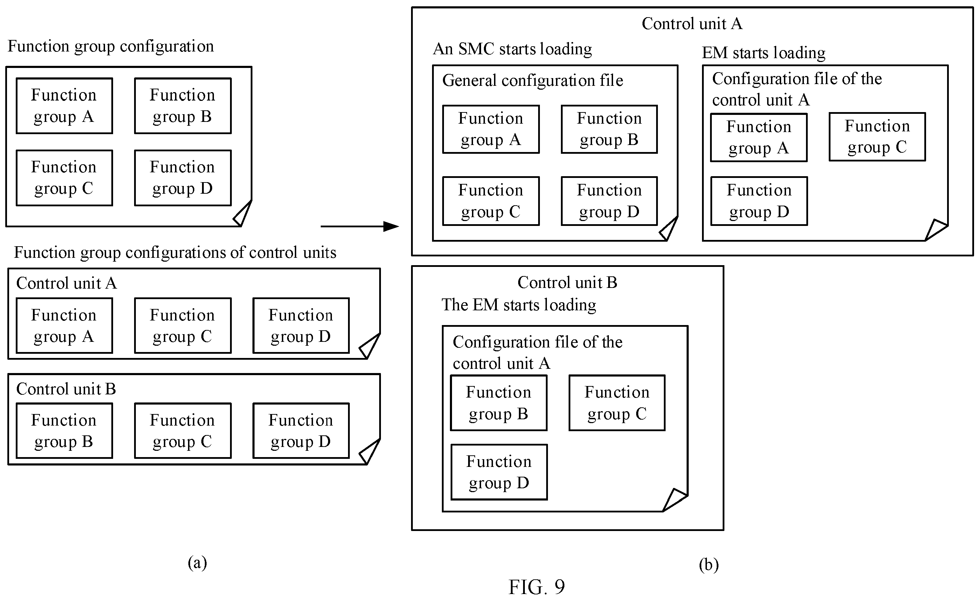

As shown in FIG. 9, (a) in FIG. 9 shows content of a user configuration file in an electronic device, and (b) in FIG. 9 shows a general configuration file and sub-configuration files on a vehicle. Four function groups, the function group A, the function group B, the function group C, and MachineState (corresponding to a function group D in the figure), may be configured in a function group configuration, which corresponds to the foregoing procedure of configuring the function groups in the common ARXML file. User configuration files of two control units respectively reference the function groups shown in FIG. 9, and correspond to the user configuration files in the second step. Correspondingly, after the generated sub-configuration files and the general configuration file are stored in the intelligent driving platform, as shown on a right side of FIG. 9, the general configuration file that can be read by the state management center in the control unit A may include a correspondence between the four function groups and a control unit, and state information of four function groups: the function group A, the function group B, the function group C, and MachineState. A sub-configuration file that can be read by the execution management node in the control unit A may include state information of the function group B, the function group C, and MachineState, and a sub-configuration file that can be read by the execution management node in the control unit B may include state information of the function group A, the function group C, and MachineState.

Step 4: The state management center manages states of function groups in a plurality of control units based on the general configuration file.

For the management method herein, refer to the foregoing description.

In addition, to ensure that the vehicle can travel safely, the following steps may be performed:
when state switching of a first function group succeeds, displaying prompt information, where the prompt information indicates that state switching of the first function group succeeds, a target control unit includes a first control unit and a second control unit, and the first control unit includes a control unit that is of the target control unit and whose safety level is greater than a preset threshold; and when state switching of both the first control unit and the second control unit succeeds, determining that state switching of the first function group succeeds; or when state switching of the first control unit succeeds, and the second control unit is abnormal, determining that state switching of the first function group succeeds.

That is, the target control unit includes at least one control unit whose safety level is greater than the threshold, and at least one control unit whose safety level is less than or equal to the threshold. When it may be determined that the at least one control unit whose safety level is less than or equal to the threshold is faulty, a state switching result may be determined only based on a state switching result of a control unit that is not faulty, and whether state switching of the control unit whose safety level is less than the threshold succeeds does not affect a final state switching result.

In this way, a function performed by the control unit whose safety level is less than or equal to the threshold is usually a function irrelevant to safety. To ensure that the movable intelligent device can still run normally when these control units are faulty, a state switching result can be determined only based on the state switching result of the control unit that is not faulty. In this way, when the control unit whose safety level is less than or equal to the threshold is faulty, the faulty control unit does not need to be repeatedly triggered to perform state switching, which ensures that the control unit whose safety level is greater than the threshold can normally run independently, and ensures basic running of the control unit.

In addition, the state switching result is displayed, so that the user can be notified of a current status of the movable intelligent device, thereby improving user experience.

The following describes a procedure of managing states by using an example with reference to FIG. 9.

Scenario 1: The state management center determines that there is a state switching requirement for the function group C. The state management center may determine, based on the general configuration file, that the control unit A and the control unit B both include the function group C, and may separately send a state switching instruction to the state management node in the control unit A and the state management node in the control unit B. The instruction instructs to perform state switching on the function group C. For a specific procedure in which the state management node controls the function group C to manage states, refer to the foregoing description.

In this case, the state management center may determine a final return result based on state switching of the function group C in the two control units. For example, the state management center may determine that state switching succeeds when state switching of the function group C in the two control units succeeds, and determine that state switching fails when state switching of the function group C in any one of the two control units fails.

Scenario 2: The state management center determines that there is a state switching requirement for the function group A. The state management center may determine, based on the general configuration file, that the control unit B includes the function group A, and may send a state switching instruction to the state management node in the control unit B. The instruction instructs to perform state switching on the function group A.

In this case, the state management center may determine a state switching result of the control unit B based on a state switching result forwarded, through the state management node in the control unit B, by the execution management node in the control unit B. For example, if determining that state switching of the function group A succeeds, the execution management node in the control unit B returns a state switching success to the state management node in the control unit B. The state management node in the control unit B forwards information indicating that state switching succeeds to the state management center. The state management center determines, based on the received information, that state switching of the function group A in the control unit B succeeds.

Scenario 3: When the control unit B is abnormal, the control unit A is the control unit whose safety level is greater than the threshold, and the control unit B is the control unit whose safety level is less than or equal to the threshold, which may ensure that the vehicle can still normally run for a period of time through independent running of the control unit A. If a state of a function group included in two control units needs to be switched, a final switching result may be determined only based on a state switching result of the control unit A.

Specifically, the state management center may determine, by using a mechanism such as heartbeat, that the control unit B is abnormal. When state switching of the function group C needs to be performed, whether state switching succeeds may be determined only based on the state switching result of the control unit A.

A state switching method of another function group is similar to the foregoing. In the foregoing scenario, when state switching succeeds, prompt information may be displayed to prompt the user using the movable intelligent device that state switching succeeds.

For an application scenario of this application, this application may be applied to a movable intelligent device integrated with a single SoC, or may be applied to a movable intelligent device integrated with a plurality of SoCs. The method for deploying the SMC integrated with a single SoC in the movable intelligent device is the same as that described above. When the movable intelligent device is integrated with a plurality of SoCs, one SMC may also be deployed, and the SMC may control the control units in the plurality of SoCs. As described above, in a multi-SoC scenario, labels used to identify control units corresponding to different SoCs may be further added to the general configuration file.

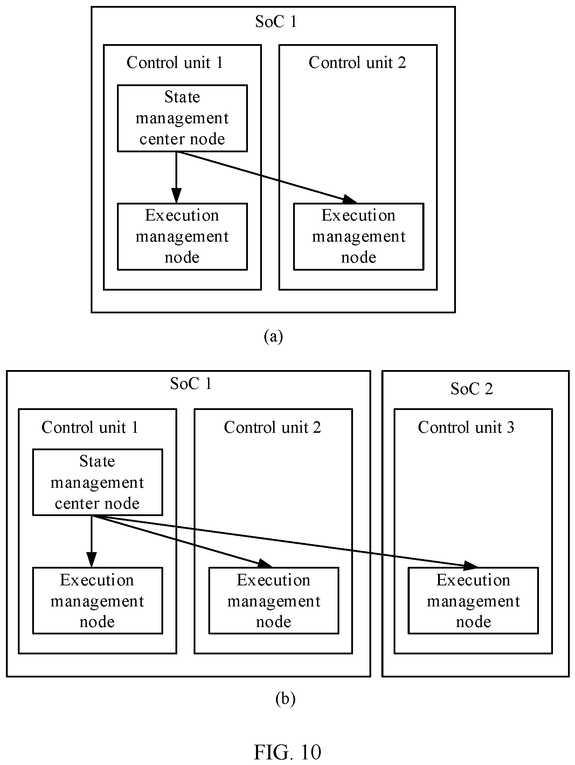

For SMC deployment in a single SoC and dual SoCs, refer to (a) in FIG. 10 and (b) in FIG. 10.

As shown in (a) in FIG. 10, in a single-SoC scenario, one SMC is deployed in a movable intelligent device, and is configured to manage a control unit 1 and a control unit 2. For example, as shown in (a) in FIG. 10, the SMC communicates with an execution management node, to complete management of states of a function group. Certainly, an SMN may alternatively be set in each control unit, and the SMC may alternatively communicate with the SMN to complete management of states of a function group.

As shown in (b) in FIG. 10, in a dual-SoC scenario, one SMC may be deployed in one movable intelligent device, and the SMC is configured to manage a control unit 1, a control unit 2, and a control unit 3 in the two SoCs.

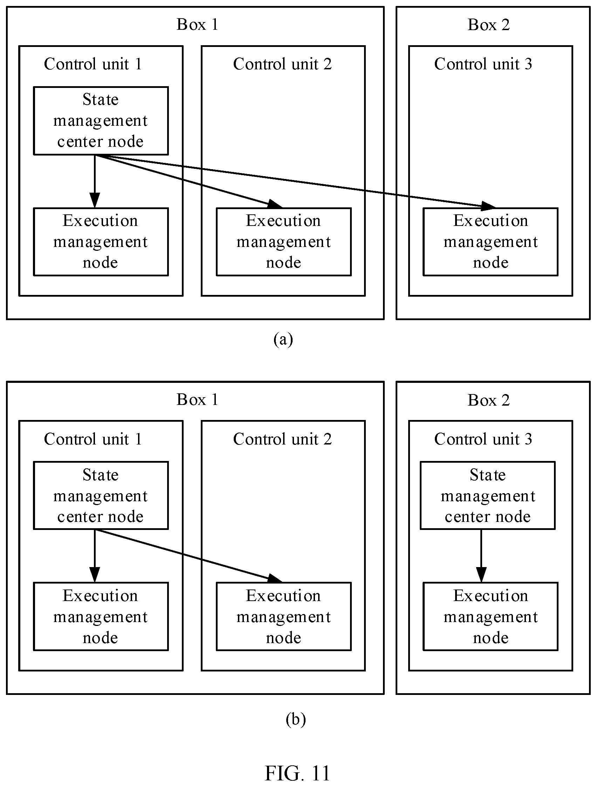

In addition, in some cases, a plurality of boxes may be deployed in one movable intelligent device, and each box may be considered as a control system of the movable intelligent device. In this case, in a scenario in which a plurality of boxes are deployed in a movable intelligent device, only one SMC may be deployed, or one SMC may be deployed in each box, and the SMC manages states of a function group in the box. When two boxes are deployed in one movable intelligent device, for a diagram in which one SMC is deployed, refer to (a) in FIG. 11, and for a diagram in one SMC is deployed in each box, refer to (b) in FIG. 11. In addition, a plurality of SoCs may alternatively be deployed in each box. For a control method in a scenario in which a plurality of SoCs are deployed, refer to the foregoing description.

An embodiment of this application further provides an apparatus configured to implement any one of the foregoing methods, for example, provides an apparatus including units (or means) configured to implement the steps performed by the movable intelligent device in any one of the foregoing methods. For another example, another apparatus is further provided, including a unit (or means) configured to implement each step performed by the electronic device in any one of the foregoing methods. The foregoing steps may be implemented by hardware, or may be implemented by hardware executing corresponding software. The hardware or software includes one or more modules corresponding to the foregoing functions, for example, a processing module, an obtaining module, and a generation module. In an example, the movable intelligent device may include a processing module, and the processing module may perform the foregoing steps 501 and 502. The electronic device may include an obtaining module and a processing module, the obtaining module may perform the foregoing step 701, and the processing module may perform the foregoing step 702.

This application further provides a movable intelligent device, including a memory and a processor. The memory is configured to store a computer program, and the processor is configured to execute the computer program to implement the foregoing state management method.

This application further provides an electronic device, including a memory and a processor. The memory is configured to store a computer program, and the processor is configured to execute the computer program to implement the foregoing configuration file generation method.

This application further provides a computer-readable storage medium. The computer-readable storage medium stores a computer program, and the computer program is used to implement any one of the foregoing methods.

This application further provides a computer program product, including computer-readable code or a non-volatile computer-readable storage medium carrying computer-readable code. When the computer-readable code is run in an electronic device, a processor in the electronic device performs any one of the foregoing methods.

It should be understood that division of the modules in the foregoing apparatus is merely logical function division. During actual implementation, all or some of the modules may be integrated into one physical entity, or may be physically separated.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

In embodiments of this application, prefix words "first" and "second" are used only to distinguish between different described objects, and do not limit locations, sequences, priorities, quantities, content, or the like of the described objects.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

## Claims

1. A state management method, applied to a movable intelligent device, wherein the movable intelligent device comprises a plurality of control units, each of the plurality of control units comprises a plurality of processes, the plurality of processes in each control unit are divided into a plurality of function groups based on different implemented functions, each of the plurality of function groups comprises at least two states, the state of the function group is used to control a running state of a process that corresponds to the function group, and at least two of the plurality of control units correspond to a same function group; and the method comprises:
in response to a requirement of switching a first function group from a first state to a second state, determining, from the plurality of control units based on a first configuration file, a target control unit that corresponds to the first function group, wherein the first configuration file indicates a correspondence between each of the plurality of control units and a function group; and
controlling a process that is in the target control unit and that corresponds to the first function group to perform state switching.

2. The method according to claim 1, wherein the movable intelligent device further comprises a state management center;
determining, from the plurality of control units based on the first configuration file, the target control unit that corresponds to the first function group comprises:
determining, by the state management center, the target control unit from the plurality of control units based on the first configuration file; and
controlling the process that is in the target control unit and that corresponds to the first function group to perform state switching comprises:
sending, by the state management center, a state switching instruction to the target control unit, wherein the state switching instruction instructs to switch the first function group from the first state to the second state;
receiving, by the target control unit, the state switching instruction; and
controlling, by the target control unit according to the state switching instruction, the process that is in the target control unit and that corresponds to the first function group to perform state switching.

3. The method according to claim 2, wherein each of the plurality of control units further comprises a state management node and an execution management node; and
controlling, by the target control unit according to the state switching instruction, the process that is in the target control unit and that corresponds to the first function group to perform state switching comprises:
receiving, by the state management node in the target control unit, the state switching instruction;
forwarding, by the state management node in the target control unit, the state switching instruction to the execution management node in the target control unit; and
controlling, by the execution management node in the target control unit according to the state switching instruction and based on a second configuration file, the process that is in the target control unit and that corresponds to the first function group to perform state switching, wherein the second configuration file indicates a function group in the target control unit and state information that corresponds to the function group.

4. The method according to claim 2 or 3, wherein the state management center is deployed in a control unit with highest reliability among the plurality of control units.

5. The method according to any one of claims 1 to 4, wherein the method further comprises:
displaying prompt information when state switching of the first function group succeeds, wherein the prompt information indicates that state switching of the first function group succeeds, wherein
the target control unit comprises a first control unit and a second control unit, and the first control unit comprises a control unit that is of the target control unit and whose safety level is greater than a preset threshold; and when state switching of both the first control unit and the second control unit succeeds, determining that state switching of the first function group succeeds; or when state switching of the first control unit succeeds, and the second control unit is abnormal, determining that state switching of the first function group succeeds.

6. The method according to any one of claims 1 to 5, wherein
the first configuration file comprises an identifier of each of the plurality of control units, and an identifier that is of a function group and that corresponds to the identifier of each control unit; or
the first configuration file comprises an identifier of each of the plurality of control units, an identifier that is of a function group and that corresponds to the identifier of each control unit, and an identifier that is of a system-on-a-chip SoC and that corresponds to the identifier of each control unit.

7. A configuration file generation method, wherein the method comprises:
obtaining at least two third configuration files, wherein the at least two third configuration files one-to-one correspond to at least two control units on a movable intelligent device, each of the at least two control units comprises a plurality of processes, the plurality of processes in each control unit are divided into a plurality of function groups based on different implemented functions, the third configuration file indicates a function group that corresponds to each process comprised in the control unit that corresponds to the third configuration file, and state information of each function group, the state information indicates at least two states that a corresponding function group comprises, and the state of the function group is used to control a running state of a process that corresponds to the function group; and
generating a first configuration file of the movable intelligent device based on the at least two third configuration files, wherein the first configuration file indicates a correspondence between each of a plurality of control units on the movable intelligent device and a function group.

8. The method according to claim 7, wherein
the first configuration file comprises an identifier of each of the plurality of control units, and an identifier that is of a function group and that corresponds to the identifier of each control unit; or
the first configuration file comprises an identifier of each of the plurality of control units, an identifier that is of a function group and that corresponds to the identifier of each control unit, and an identifier that is of a system-on-a-chip SoC and that corresponds to the identifier of each control unit.

9. The method according to claim 8, wherein the identifier that is of the control unit and that is comprised in the first configuration file is generated based on a first identifier in the at least two third configuration files, and the first identifier is an identifier of a control unit that corresponds to the third configuration file to which the first identifier belongs.

10. A movable intelligent device, comprising a plurality of control units, a memory, and a processor, each of the plurality of control units comprises a plurality of processes, the plurality of processes in each control unit are divided into a plurality of function groups based on different implemented functions, each of the plurality of function groups comprises at least two states, the state of the function group is used to control a running state of a process that corresponds to the function group, and at least two of the plurality of control units correspond to a same function group; and
the memory is configured to store a computer program, and the processor is configured to execute the computer program to implement the state management method according to any one of claims 1 to 6.

11. An electronic device, comprising a memory and a processor, wherein the memory is configured to store a computer program, and the processor is configured to execute the computer program to implement the configuration file generation method according to any one of claims 7 to 9.

12. A computer-readable storage medium, wherein the computer-readable storage medium stores a computer program, and the computer program is used to implement the methods according to any one of claims 1 to 9.
